# EUROPEAN PATENT SPECIFICATION

(11) **EP 4 089 517 B1**
(45) Date of publication and mention of the grant of the patent: **23.07.2025**
(21) Application number: 21796187.9
(22) Date of filing: 26.03.2021
(51) Int. Cl.: G06F 3/0481, G06F 3/0483, G06F 3/04883

(54) **PAGE SWITCHING METHOD AND APPARATUS FOR APPLICATION, AND ELECTRONIC DEVICE AND NON-TRANSITORY READABLE STORAGE MEDIUM**
VERFAHREN UND VORRICHTUNG ZUM SEITENWECHSEL SOWIE ELEKTRONISCHES GERÄT UND NICHTFLÜCHTIGES LESBARES SPEICHERMEDIUM
PROCÉDÉ ET APPAREIL DE CHANGEMENT DE PAGE POUR APPLICATION, DISPOSITIF ÉLECTRONIQUE ET SUPPORT D'ENREGISTREMENT NON TRANSITOIRE LISIBLE PAR ORDINATEUR

(30) Priority: 30.04.2020 CN 202010364405
(43) Date of publication of application: 16.11.2022
(73) Proprietor: BEIJING BYTEDANCE NETWORK TECHNOLOGY CO., LTD., Beijing 100041 (CN)
(72) Inventor: JIAO, Yubo, Beijing 100190 (CN); WANG, Zhaoyu, Beijing 100190 (CN)
(74) Representative: Dentons UK and Middle East LLP
(86) International application number: PCT/CN2021/083408
(87) International publication number: WO 2021/218519

(56) References cited:
- WO-A1-2013/173968
- WO-A1-2019/000232
- CN-A- 103 488 398
- CN-A- 105 843 491
- CN-A- 108 491 124
- CN-A- 110 868 626
- CN-A- 111 580 718
- US-A1- 2007 186 173
- US-A1- 2015 012 855
- US-A1- 2022 159 323
- US-B1- 9 471 201

## Description

### CROSS REFERENCE TO RELATED APPLICATIONS

This application claims priority to Chinese Patent Application No. 202010364405.9, filed to the State Intellectual Property Office of the People's Republic of China on April 30, 2020.

### FIELD

The present disclosure relates to the field of computer technologies, and more particularly, to a page switching method and apparatus for an application, an electronic device, and a non-transitory readable storage medium.

### BACKGROUND

With the development of mobile Internet, more and more content provision APPs (Applications) appear, these APPs may provide a plurality of different pages for a user to view different contents, and the user may switch among the plurality of pages by means of sliding operations to view the contents as desired.

In the related art, the sliding operations corresponding to the same switching action implemented in the different pages are not unified, which results in unsmooth sliding operations when the user switches among the pages, thereby providing poorer user experience. WO 2019/000232 A1 discloses a method for page navigation. US 2015/012855 A1 discloses a method for controlling a portable device providing a combined User Interface component. CN 103488398 A discloses a page display method, a page display device and an intelligent terminal.

### SUMMARY

In a first aspect, an embodiment of the present disclosure provides a page switching method for an application. The page switching method includes: displaying a current page on a display interface of the application, and displaying page identifiers of at least two first pages of the application in a predetermined region of the display interface, wherein the current page is one of the at least two first pages; obtaining a sliding operation for the current page; and when the sliding operation is a first sliding switching operation, switching the current page on the display interface to a next page, and adjusting a position of each page identifier in the predetermined region, wherein the next page is a first page of the at least two first pages other than the current page, wherein said adjusting the position of each page identifier comprises adjusting the position of each page identifier in the predetermined region while switching the current page on the display interface to the next page. The application is a short video application, the at least two first pages of the application are used to display videos of respective pushing mechanisms, and each of the page identifiers is configured to indicate a respective pushing mechanism of the video displayed on the first page corresponding to the page identifier, the pushing mechanisms including a recommended video pushing mechanism and a following video pushing mechanism. The at least two first pages are arranged in a predetermined order. Switching the current page on the display interface to the next page includes: switching the current page to a first page immediately following and adjacent to the current page in the predetermined order along an opposite direction of the first sliding switching operation, when the current page is not a first page arranged as an end in the predetermined order along the opposite direction of the first sliding switching operation; and switching the current page to a first page arranged as a top in the predetermined order along the opposite direction of the first sliding switching operation, when the current page is the first page arranged as the end in the predetermined order along the opposite direction of the first sliding switching operation. The method further comprises: subsequent to said obtaining the sliding operation for the current page, determining the sliding operation as the first sliding switching operation, when a sliding direction of the sliding operation is a first transverse direction and a corresponding sliding distance is equal to or greater than a predetermined distance; and determining the sliding operation as a second sliding switching operation, when the sliding direction of the sliding operation is a second transverse direction and the corresponding sliding distance is equal to or greater than the predetermined distance, wherein the first transverse direction is opposite to the second transverse direction, and when the sliding operation is the second sliding switching operation, switching the current page to a second page corresponding to the current page, wherein the second page is a personal page of a short video author of a short video being viewed in the current page, the personal page of the short video author including short videos published by the short video author.

In a second aspect, an embodiment of the present disclosure provides an electronic device according to claim 7.

In a third aspect, an embodiment of the present disclosure provides a non-transitory readable storage medium according to claim 8. In a fourth aspect, an embodiment of of the present disclosure provides a computer program product according to claim 9. In a fifth aspect, an embodiment of of the present disclosure provides a computer program according to claim 10.

The present disclosure may at least provide the following technical effects. Any one of the first pages of the APP is switched from the displayed current page to another first page to be displayed by means of the first sliding switching operation sent by the user, such that the sliding operations corresponding to switching actions for switching from each first page to other first pages in the APP are all the same. Thus, a smoother sliding operation can be provided when the user performs the page switching. Meanwhile, the position of the page identifier of each first page in the predetermined region of the display interface is synchronously adjusted during the page switching, such that the user can rapidly recognize the first page displayed on the display interface after the page switching.

### BRIEF DESCRIPTION OF DRAWINGS

In order to describe the technical solutions in the embodiments of the present disclosure more clearly, the accompanying drawings that need to be used for describing the embodiments of the present disclosure will be briefly described below.
FIG. 1 is a schematic flowchart illustrating a page switching method for an application according to an embodiment of the present disclosure;
FIG. 2a is a schematic diagram illustrating a switching from a recommended page to a following page in an example according to an embodiment of the present disclosure;
FIG. 2b is a schematic diagram illustrating a switching from a following page to a personal page in an example according to an embodiment of the present disclosure;
FIG. 2c is a schematic diagram illustrating a switching from a recommended page to a personal page in an example according to an embodiment of the present disclosure;
FIG. 3 is a schematic diagram illustrating a circular switching among three first pages in an example according to an embodiment of the present disclosure;
FIG. 4 is a schematic diagram illustrating a page switching animation in an example according to an embodiment of the present disclosure;
FIG. 5 is a structural block diagram illustrating a page switching apparatus for an application according to an embodiment of the present disclosure; and
FIG. 6 is a schematic structural diagram illustrating an electronic device according to an embodiment of the present disclosure.

### DESCRIPTION OF EMBODIMENTS

Embodiments of the present disclosure will be described in detail below, and examples of the embodiments are illustrated in the accompanying drawings, wherein the same or similar numerals throughout indicate the same or similar elements or elements with the same or similar functions. The following embodiments described with reference to the accompanying drawings are exemplary and are merely intended to explain the present disclosure, rather than being explained as limitations on the present disclosure.

It should be understood by the skilled in the art that singular forms "one", "a", "the" and "this" used herein may also include plural forms, unless otherwise stated. It should be further understood that the phrasing "include" used in the description of the present disclosure means that the described feature, integer, step, operation, element and/or component exists, rather than excluding the existence or addition of one or more other features, integers, steps, operations, elements, components and/or combinations thereof. It should be understood that, when an element is "connected" or "coupled" to another element, it may be directly connected or coupled to the other element, or there may be an intermediate element. In addition, the "connected" or "coupled" used herein may be wirelessly connected or wirelessly coupled. The phrasing "and/or" used herein includes all or any unit and all combinations of one or more associated listed items.

In order to make objects, technical solutions and advantages of the present disclosure clearer, implementations of the present disclosure will be further described in detail below with reference to the accompanying drawings.

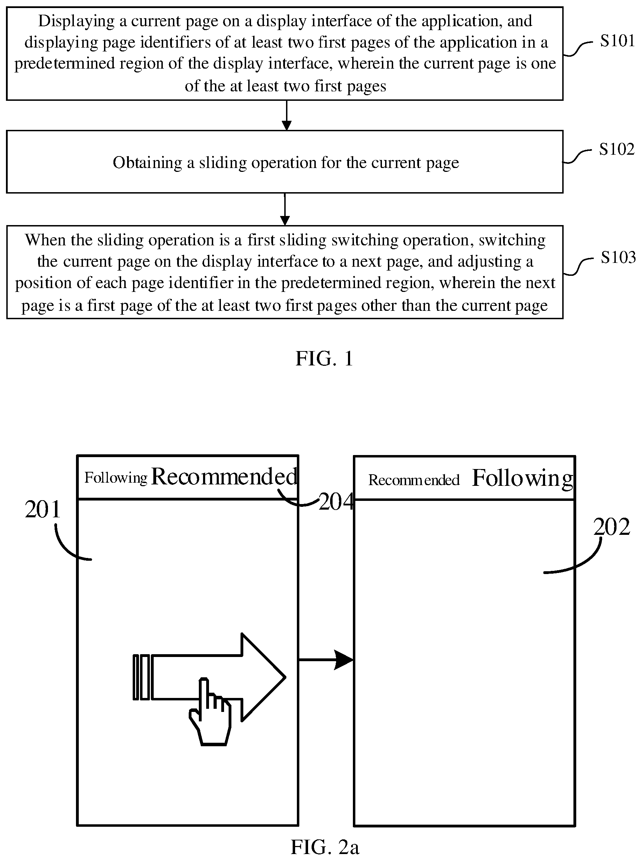

FIG. 1 is a schematic flowchart diagram illustrating a page switching method for an application according to an embodiment of the present disclosure. An executor of this method may be a terminal device. As illustrated in FIG. 1, this method may include the following steps.

At step S101, a current page is displayed on a display interface of an application, and page identifiers of at least two first pages of the application are displayed in a predetermined region of the display interface. Further, the current page is any one of the at least two first pages.

An APP developer may preset the number of the first pages of the APP based on an actual demand and preset a source and pushing mechanism of a content to be displayed in each of the first pages. If a user requires to view different first pages in the at least two first pages included in the APP, switching between the at least two first pages may be performed by means of a sliding operation. The current page is any first page being viewed by the user by means of the display interface in the APP. When the user needs to view other first pages in the APP, switching from the current page to other first pages may be performed by means of one or more sliding operations.

Each of the page identifiers is configured to indicate the source and the pushing mechanism of the content displayed on the first page corresponding to the page identifier, and may be a specific icon, a characters, or the like. Each of the page identifiers is displayed in the predetermined region of the display interface, and this predetermined region may be predetermined by the developer. For example, generally, the predetermined region may be a navigation bar arranged in a top region of the display interface, and each of the page identifiers is displayed at a predetermined position corresponding to this navigation bar. The user may distinguish the at least two first pages in the APP according to each of the page identifiers and the position where each of the page identifiers is located, and determine the specific type of the first page displayed on the display interface.

For example, in a certain short video APP, two first pages, including a recommended page and a following page, may be provided. Specifically, in the recommended page, a latest short video is recommended to the user according to a preset rule, and in the following page, a latest short video published by a short video author followed by the user is recommended to the user. In order to view the contents of the two first pages, respectively, the user may perform switching between the recommended page and the following page by means of a sliding operation. Meanwhile, the page identifier of the recommended page and the page identifier of the following page are correspondingly displayed in the navigation bar of the display interface. When the recommended page is displayed on the display interface, the user can determine that the first page displayed on the display interface is the recommended page by viewing the page identifiers in the navigation bar. When the following page is displayed on the display interface, the user can also determine that the first page displayed on the display interface is the following page by means of the page identifiers in the navigation bar.

At step S102, a sliding operation for the current page is obtained.

When the user uses a terminal device (such as a mobile phone, a tablet personal computer, or the like) to view contents by means of the display interface of the APP, the terminal device can receive the sliding operation for the current page by means of the display interface and determine an instruction corresponding to the received sliding operation, so as to make a response to this sliding operation based on the instruction.

At step S103, if the sliding operation is a first sliding switching operation, the current page on the display interface is switched to a next page, and a position of each page identifier in the predetermined region is adjusted. Further, the next page is the first page, other than the current page, between the at least two first pages.

Specifically, when the user views the current page, if the sliding operation, received by the terminal device from the user is the first sliding switching operation, it is determined that the user sends an instruction for switching from the current page to display the next page, and a switching action for switching from the current page to the next page is performed, so that the next page is displayed on the display interface. Meanwhile, in order to ensure that the user can determine, based on the page identifier in the navigation bar and the position of the page identifier, the specific type of the first page displayed on the display interface after the current page is switched to the next page on the display interface, the position of each page identifier in the predetermined region after such a switching is adjusted while switching the first pages. It should be noted that after the current page is switched to the next page, i.e., after the next page is displayed on the display interface, the user may also switch the page to a next page of the next page (namely other first pages in the APP) by means of the first sliding switching operation.

Based on the above-mentioned example, when the user uses this short video APP, the current page being viewed is the recommended page, if the first sliding switching operation sent by the user is received by the display interface, the recommended page is switched to the following page, and meanwhile, the positions of the page identifiers of the recommended page and the following page in the navigation bar are exchanged with each other. Further, when the user is viewing the following page, the following page may also be switched to the recommended page by means of the first sliding switching operation.

According to the solution provided by the present disclosure, any one of the first pages of the APP is switched from the displayed current page to another first page to be displayed by means of the first sliding switching operation sent by the user, such that the sliding operations corresponding to switching actions for switching from each first page to other first pages in the APP are all the same. Thus, a smoother sliding operation can be provided when the user performs the page switching. Meanwhile, the position of the page identifier of each first page in the predetermined region of the display interface is synchronously adjusted during the page switching, such that the user can rapidly recognize the first page displayed on the display interface after the page switching.

In some embodiments of the present disclosure, this method may also include switching the current page to a second page corresponding to the current page when the sliding operation is a second sliding switching operation.

The second page may be understood as a page different from the first page in type, and there is a correlation between the second page corresponding to the current page and the content being displayed on this current page. That is, the corresponding second page may be determined by the content being displayed on the current page. In some cases, the user also needs to switch the page to the second page to view contents.

Based on the above-mentioned example, in this short video APP, the second page may be a personal page of a certain short video author. The personal page includes all short videos published by this short video author. That is, the correlation between the short video being displayed on the recommended page or the following page and the corresponding personal page is that the author of the short video being displayed on the recommended page or the following page is the same as the author of the short video included in the personal page. When the user views a short video published by a certain short video author on the recommended page or the following page, if the user wishes to further view other short videos published by this short video author, a switching to the personal page of this short video author is performed to view these videos.

Specifically, when the user views the current page, if the sliding operation received by the terminal device from the user is the second sliding switching operation, i.e., it is determined that the a switching instruction for switching from the current page to the corresponding second page is sent by the user, and a switching action for switching from the current page to the corresponding second page is performed to display the corresponding second page on the display interface. It should be noted that after the switching to the second page corresponding to a certain first page is performed, the user can return the current page to this first page by means of a return operation.

Based on the above-mentioned example, when the user uses this short video APP and the current page being viewed is the recommended page, if the second sliding switching operation sent by the user is received by the display interface, the recommended page is switched to the personal page of the short video author whose short video is being viewed by user. The following page may also be switched to the corresponding second page through sending the second sliding switching operation by the user.

The present embodiment has the beneficial effects that the corresponding sliding operation for switching from the current page to the second page in each first page of the APP is further unified, such that the sliding operation is smoother when the page switching is performed by the user.

In some embodiment of the present disclosure, the method also includes, subsequent to obtaining the sliding operation for the current page, if a sliding direction of the sliding operation is a first transverse direction, and a corresponding sliding distance is not less than a predetermined distance, the sliding operation is determined as the first sliding switching operation. If the sliding direction of the sliding operation is a second transverse direction, and a corresponding sliding distance is not less than a predetermined distance, the sliding operation is determined as the second sliding switching operation. Further, the first transverse direction is opposite to the second transverse direction.

Further, in responding to receiving the sliding operation of the user by the terminal device, an effectiveness of the sliding operation is determined based on the sliding distance corresponding to the sliding operation. That is, if the sliding distance corresponding to the sliding operation is greater than the predetermined distance, it is determined that an effective instruction is sent by the user. Further, a specific type of the sliding operation, i.e., a specific content of an instruction corresponding to the siding operation, is determined based on the sliding direction corresponding to the sliding operation. When the sliding direction corresponding to the sliding operation is the first transverse direction, the sliding operation is determined as the first sliding switching operation, i.e., the corresponding instruction is determined as an instruction for switching from the current page to the next page. In addition, when the sliding direction corresponding to the sliding operation is the second transverse direction, the sliding operation is determined as the second sliding switching operation, i.e., the corresponding instruction is determined as an instruction for switching from the current first page to the corresponding second page. Further, the first transverse direction is opposite to the second transverse direction. In addition, since the sliding directions corresponding to the two types of sliding operations are opposite to each other, the sliding operation is simpler and easier for the use when performing the page switching by using the APP.

In an actual application, the sliding direction corresponding to the first transverse direction may be set to be rightward, and the sliding direction corresponding to the second transverse direction may be set to be leftward.

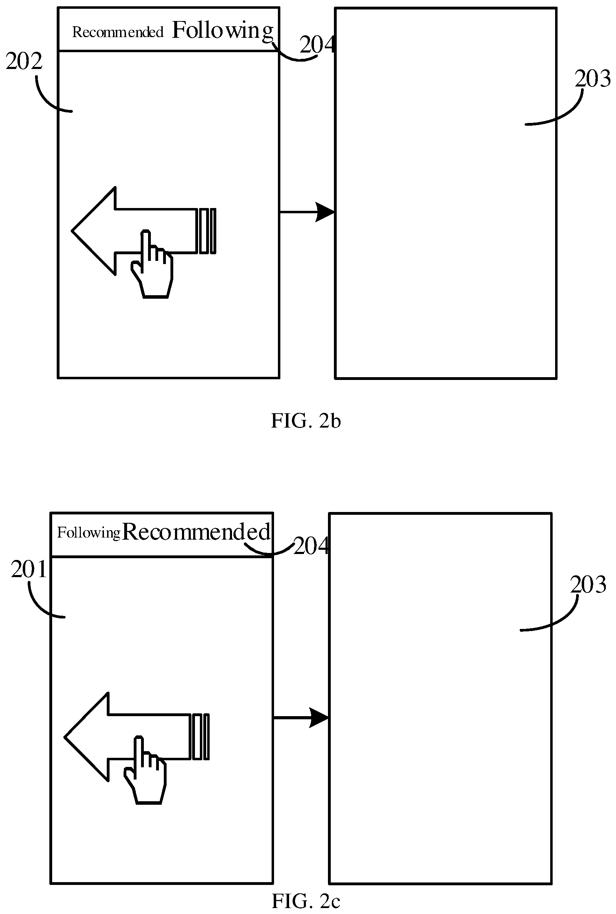

For example, as illustrated in FIG. 2a to FIG. 2c that are schematic diagrams illustrating a page switching of a certain short video APP, the recommended page and the following page are the first pages in the present disclosure, and the personal page is the second page in the present disclosure. In FIG. 2a, the current page is the recommended page. In the left figure, the user performs a rightward sliding operation on the recommended page 201 (that is, the first sliding switching operation is sent) to be switched to the following page 202 in the right figure. That is, the switching between the recommended page and the following page as two first pages is implemented by the rightward sliding operation. Meanwhile, in the navigation bar 204 of the display interface, a position of a page identifier "recommended" in a recommendation bar and a page identifier "following" in the following page are exchanged with each other, such that the first page displayed on the display interface is the following page after the switching is determined by the user based on the page identifiers and the positions of the page identifiers in the navigation bar 204. In FIG. 2b, the current page is the following page. In the left figure, the user performs a leftward sliding operation on the following page 202 (that is, the second sliding switching operation is sent) to be switched to the personal page 203 in the right figure. In FIG. 2c, the current page is the recommended page. In the left figure, the user performs a leftward sliding operation on the recommended page 201 to be switched to the personal page 203 in the right figure. It should be noted that the authors of short videos displayed to the user on the current pages in FIG. 2b and FIG. 2c are generally different, and therefore the personal pages 203 in these two figures may correspond to personal pages of different authors, respectively. It can be seen from the above-mentioned example, the switching among the first pages can be implemented by performing the rightward sliding operation on the first pages by the user, and the switching from the first page to the second pages can be implemented by performing the leftward sliding on the first page by the user. That is, the sliding operations, corresponding to the switching among the first pages, performed on the recommended page and the following page by the user are the same, and the sliding operations, corresponding to the switching from the first page to the second page, performed on the recommended page and the following page by the user are also the same, such that the sliding operation is smoother when the user performs the page switching, thereby providing better user experience.

In some embodiments of the present disclosure, the at least two first pages are arranged in a predetermined order, and switching the current page on the display interface to the next page includes: switching the current page to a first page immediately following and adjacent to the current page in the predetermined order, when the current page is not a first page arranged as an end; and switching the current page to a first page arranged as a top, when the current page is the first page arranged as the end.

Arranging the first pages of the APP in the predetermined order aims at determining a next page to be switched from the current page when the first pages are switched. That is, when being switched, the first page can be orderly switched based on the predetermined order.

Specifically, when the first sliding switching operation is received, when the current page is not a first page arranged as an end, the current page is switched to the first page immediately following and adjacent to the current page in the predetermined order, and when the current page is the first page arranged as the end, the current page is switched to a first page arranged as a top. In other words, when the user continuously and repeatedly switches the first pages by means of the first sliding switching operation, the first pages are circularly switched in order.

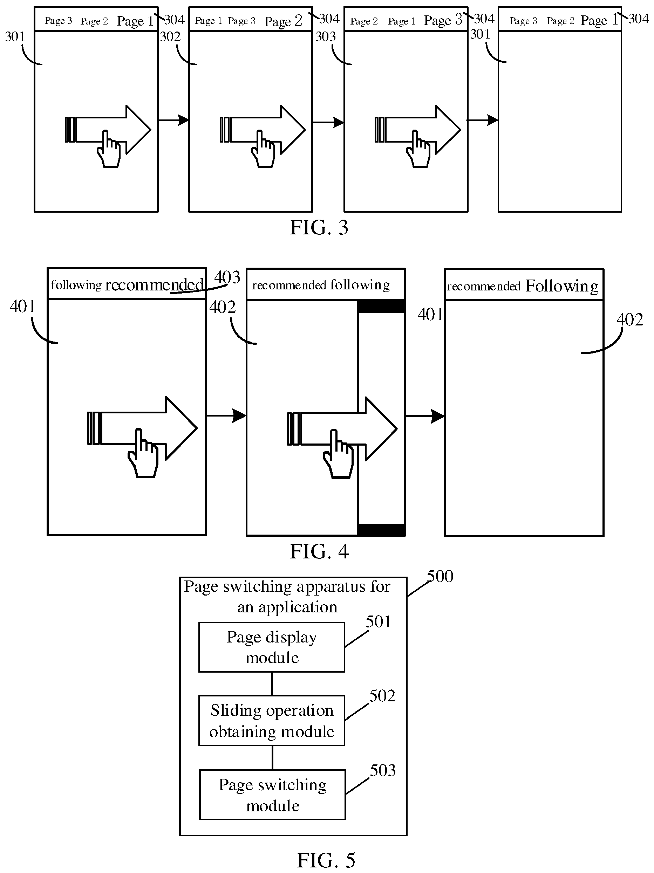

For example, as illustrated in FIG. 3, a certain APP includes three first pages including a page 1 (illustrated by reference numeral 301 in the figure), a page 2 (illustrated by the reference numeral 302 in the figure), and a page 3 (illustrated by the reference numeral 303 in the figure). The page 1, the page 2, and the page 3 are arranged in sequence. FIG. 3 illustrates one circular switching process from left to right. Specifically, in the first figure, the current page is the page 1, and the rightward sliding operation is performed on the page 1 by the user to be switched to the page 2 immediately following the page 1, as shown in the second figure. In the second figure, the current page is the page 2, and the rightward sliding operation is further performed on the page 2 to be switched to the page 3 immediately following the page 2, as shown in the third figure. In the third figure, the current page is the page 3 that is a page arranged as an end, and the rightward sliding operation is further performed on the page 3 to be switched to the page 1 arranged as a top, as shown in the fourth figure. As can be seen from the above-mentioned descriptions, the circular switching to the first page, on which the first sliding operation is performed, displayed on the display interface can be implemented through performing the rightward sliding operations three times by the user.

In some embodiments of the present disclosure, the respective page identifiers are displayed in the predetermined region in a form of a transverse queue, and adjusting the position of each page identifier in the predetermined region includes displaying the page identifier of the next page at a tail of the transverse queue, and displaying the page identifier of the current page at a head of the transverse queue.

The predetermined region may be the navigation bar. The position of each page identifier in the predetermined region is adjusted while performing the switching among the first pages every time, such that the specific type of the first page displayed on the display interface can be determined by the user based on the page identifier in the navigation bar and the position of the page identifier after the page switching is performed.

Specifically, the page identifier of the next page is displayed at the tail of the transverse queue, and the page identifier of the current page is displayed at the head of the transverse queue. That is, the page identifier of the first page (i.e., the next page) displayed on the display interface after the page switching is performed is displayed at the tail of the transverse queue in the navigation bar, and the page identifier of the first page (i.e., the current page) displayed on the display interface before the page switching is performed is displayed at the head of the transverse queue in the navigation bar. In that way, after the switching among the first pages is completed, the user can determine that the first page displayed on the display interface is the first page corresponding to the page identifier at the tail of the transverse queue in the navigation bar. It should be understood that the positions of the page identifiers in the navigation bar are circularly switched when the switching among the first pages is performed by means of the continuous first sliding switching operation.

With further reference to FIG. 2a, the two first pages included in this short video APP are the recommended page and the following page, respectively. When the recommended page 201 is switched to the following page 202, the position of the page identifier "recommended" of the recommended page in the navigation bar 204 is simultaneously displaced from the tail to the head of the transverse queue, and the position of the page identifier "following" of the following page is displaced from the head to the tail of the transverse queue. In other words, the positions of the page identifiers of the recommended page and the following page in the transverse queue are exchanged with each other. After the switching among the first pages is completed, the user can determine that the first page displayed on the display interface is the first page, i.e., the following page, corresponding to the page identifier "following" at the tail of the transverse queue in the navigation bar 204.

With reference to FIG. 3 again, this APP includes three first pages that are the page 1 (the page identifier is "page 1"), the page 2 (the page identifier is "page 2"), and the page 3 (the page identifier is "page 3"), respectively. The three page identifiers in the navigation bar 304 are illustrated. The postilions of the three page identifiers in the navigation bar 304 are also switched synchronously while the switching among the first pages are performed by means of the first sliding switching operation three times by the user. Specifically, when the first sliding switching operation is sent by the user for the first time, the page 1 as shown in the first figure is switched to the page 2 as shown in the second figure, the page identifier of the page 1 in the navigation bar 304 is switched from the tail of the transverse queue to be displayed at the head of the transverse queue, and the page identifier of the page 2 is switched to be displayed at the tail of the transverse queue, which indicating that the first page displayed on the display interface after switching is the page 2. When the first sliding switching operation is sent by the user for the second time, the page 2 shown in the second figure is switched to the page 3 shown in the third figure, and the page identifier of the page 2 in the navigation bar 304 is switched to be displayed at the head of the transverse queue, and the page identifier of the page 3 is switched to be displayed at the tail of the transverse queue, which indicates that the first page displayed on the display interface after switching is the page 3. When the first sliding switching operation is sent by the user for the third time, the page 3 shown in the third figure is switched to the page 1 shown in the fourth figure, the page identifier of the page 3 in the navigation bar 304 is switched to be displayed at the head of the transverse queue, and the page identifier of the page 1 is switched to be displayed at the tail of the transverse queue. As can be seen from the above-mentioned descriptions, when the APP includes three first pages, the positions of the page identifiers of the three first pages in the navigation bar are circularly switched to be displayed.

In an embodiment of the present disclosure, the page identifiers are page names corresponding to the first pages. This method may also include at least one of: enlarging a font size of the page name at the tail of the transverse queue; changing a font color of the page name at the tail of the transverse queue; and adding an underline to the page name at the tail of the transverse queue.

Further, the page identifiers may be names of the corresponding first pages. For example, the page name of the recommended page may be "recommended", and the page name of the following page may be "following".

Specifically, in order to provide convenience for the user to determine the specific type of the current first page based on the page identifier and the position of the page identifier, the page name of the first page displayed on the display interface may be highlighted. That is, the page name at the tail of the transverse queue in the navigation bar is highlighted. A specific highlighting manner includes at least one of: enlarging a font size of the page name at the tail of the transverse queue, i.e., enlarging the font size of the page name at the tail of the transverse queue to be greater than font sizes of other page names; changing a font color of the page name at the tail of the transverse queue, i.e., setting the font color of the page name at the tail of the transverse queue to be different from the font colors of other page names; and adding an underline to the page name at the tail of the transverse queue, i.e., adding the underline to the page name at the tail without adding underlines to other page names.

With reference to FIG. 2a again, in this short video APP, a font size of the page name "recommended" of the recommended page as the current page is greater than a font size of the page name "following" of the following page. That is, the page name of the recommended page is highlighted, and the user can thus more intuitively determine that the first page displayed on the display interface is the recommended page. After the switching to the following page is performed by the user by means of the rightward sliding operation, the page identifier in the navigation bar is also switched to be displayed at the tail of the transverse queue, and the font size of the page name "following" is greater than the font size of the page name "recommended" of the recommended page. That is, the page name of the following page is highlighted, and the user can thus more intuitively determine that the first page displayed on the display interface is the following page.

In some embodiments of the present disclosure, this method may also include displaying a corresponding page switching animation while the switching the current page on the display interface to the next page.

Specifically, in order to increase a perception of the user for a first page switching action, the corresponding page switching animation may be added in response to the page switching.

Specifically, displaying the corresponding page switching animation includes displaying a page switching animation in which a page gradually becomes bigger as appearing and gradually becomes smaller as disappearing and/or a page switching animation in which the page is gradually covered.

Specifically, during switching from the current page to the next page, the page switching animation in which a page gradually becomes bigger as appearing and gradually becomes smaller as disappearing may be an animation in which the size of the next page is greater and greater, and the size of the current page is smaller and smaller. The page switching animation in which the page is gradually covered may be an animation in which the current page is gradually covered by the next page.

For example, as illustrated in FIG. 4 that is a schematic diagram illustrating a switching animation of a certain short video APP, this short video APP includes two first pages that are a recommended page 401 and a following page 402, respectively. During performing a switching from the recommended page to the following page by the user by means of a rightward sliding operation, it is illustrated in the left figure that the current page is the recommended page 401. During the switching, as illustrated in the middle figure, the recommended page 401 is gradually covered by the following page 402, and a display size of the recommended page 401 is gradually reduced until the recommended page 401 is completely covered by the following page in the right figure, and the switching is completed. It should be noted that a font size of a page name in a navigation bar 403 is also gradually changed based on a principle, in which the front size gradually becomes bigger as appearing and gradually becomes smaller as disappearing in response to the page switching. Specifically, during the switching, the font size of the page name "following" of the following page is gradually enlarged, and the font size of the page name "recommended" of the recommended page is gradually reduced until they are changed to preset sizes respectively when the switching is completed. As can be seen from the above-mentioned descriptions, by means of gradual page coverage effect, page size change and font size change in the first page switching process, the visual perception of the user for the first page switching process is enhanced, thereby improving the user experience.

FIG. 5 is a structural block diagram illustrating a page switching apparatus for an application according to an embodiment of the present disclosure. As illustrated in FIG. 5, this apparatus 500 may include a page display module 501, a sliding operation obtaining module 502, and a page switching module 503. The page display module 501 is configured to display a current page on a display interface of an application, and display, in a predetermined region of the display interface, page identifiers of at least two first pages of the application. The current page may be any first page of the at least two first pages. The sliding operation obtaining module 502 is configured to obtain a sliding operation for the current page. The page switching module 503 is configured to: when the sliding operation is a first sliding switching operation, switch the current page on the display interface to a next page, and adjust a position of each page identifier in the predetermined region. Further, the next page is a first page of the at least two first pages other than the current page.

According to the solution provided by the present disclosure, any one of the first pages of the APP is switched from the displayed current page to other first pages to be displayed by means of the first sliding switching operation sent by the user, such that the sliding operations corresponding to switching actions for switching from each first page to other first pages in the APP are all the same. Thus, a smoother sliding operation can be provided when the user performs the page switching. Meanwhile, the position of the page identifier of each first page in the predetermined region of the display interface is synchronously adjusted during the page switching, such that the user can rapidly recognize the first page displayed on the display interface after the page switching.

In some embodiments of the present disclosure, this apparatus may also include a second page switching module configured to: if the sliding operation is a second sliding switching operation, switch the current page to a second page corresponding to the current page.

In some embodiments of the present disclosure, this apparatus may also include a sliding operation type determination module configured to: subsequent to the obtaining the sliding operation for the current page, if the sliding direction of the sliding operation is a first transverse direction, and a corresponding sliding distance is not less than a predetermined distance, determine the sliding operation as a first sliding switching operation, and if the sliding direction of the sliding operation is a second transverse direction, and a corresponding sliding distance is not less than a predetermined distance, determine the sliding operation as a second sliding switching operation. Further, the first transverse direction is opposite to the second transverse direction.

In some embodiments of the present disclosure, the page switching module is specifically configured to: if the current page is not a first page arranged as an end, switch the current page to a first page immediately following and adjacent to the current page in a predetermined order, and if the current page is the first page arranged as the end, switch the current page to a first page arranged as a top.

In some embodiments of the present disclosure, respective page identifiers are displayed in the predetermined region in a form of a transverse queue, and the page switching module is specifically configured to: display the page identifier of the next page at a tail of the transverse queue, and display the page identifier of the current page at a head of the transverse queue.

In some embodiments of the present disclosure, this apparatus may also include a highlighting module specifically configured to perform at least one of: enlarging a font size of a page name at the tail of the transverse queue; changing a font color of the page name at the tail of the transverse queue; and adding an underline to the page name at the tail of the transverse queue.

In some embodiments of the present disclosure, this apparatus may also include a switching animation display module configured to: display a corresponding page switching animation when switching the current page on the display interface to the next page.

In some embodiments of the present disclosure, the switching animation display module is specifically configured to: display a page switching animation in which a page gradually becomes bigger as appearing and gradually becomes smaller as disappearing and/or a page switching animation in which a page is gradually covered.

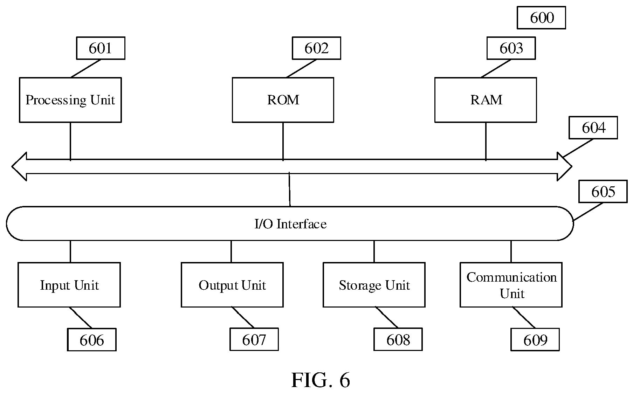

Reference is now made to FIG. 6, which is a schematic diagram showing a structure of an electronic device 600 (for example, a terminal device or a server for implementing the method illustrated in FIG. 1) adapted to implement the embodiments of the present disclosure. The terminal device according to the embodiments of the present disclosure may include, but are not limited to, a mobile terminal such as a mobile phone, a laptop computer, a digital broadcast receiver, a Personal Digital Assistant (PDA), a tablet computer or PAD, a Portable Multimedia Player (PMP), an on-vehicle terminal (e.g., an on-vehicle navigation terminal), etc., and a fixed terminal such as a digital TV, a desktop computer, etc. The electronic device illustrated in FIG. 6 is exemplary only, and should not be construed as limiting the function and use range of the embodiments of the present disclosure.

The electronic device includes a memory and a processor. The processor may be referred to as a processing unit 601 described below, and the memory may include at least one of a Read Only Memory (ROM) 602, a Random Access Memory (RAM) 603, or a storage unit 608 that are described below. Specific details are described below.

As illustrated in FIG. 6, the electronic device 600 may include a processing unit (such as a central processing unit, a graphics processing unit, etc.) 601, which may perform various appropriate actions and processes in accordance with programs stored in the ROM 602 or loaded from a storage unit 608 into the RAM 603. Various programs and data required for operation of the electronic device 600 may also be stored in the RAM 603. The processing unit 601, the ROM 602, and the RAM 603 are connected to each other through a bus 604. An Input/Output (I/O) interface 605 is also connected to the bus 604.

Generally, the following units may be connected to the I/O interface 605: an input unit 606 including, for example, a touch screen, a touch pad, a keyboard, a mouse, a camera, a microphone, an accelerometer, a gyroscope, etc.; an output unit 607 including, for example, a Liquid Crystal Display (LCD), a speaker, an oscillator, etc.; the storage unit 608 including, for example, a magnetic tape or a hard disk; and a communication unit 609. The communication unit 609 may allow the electronic device 600 to perform wireless or wired communication with other devices for data exchange. Although FIG. 6 illustrates the electronic device having various units, it should be appreciated that it is not necessary to implement or provide all the illustrated units. Alternatively, more or fewer units may be implemented or provided.

In particular, according to embodiments of the present disclosure, the above processes described with reference to the flowcharts may be implemented as computer software programs. For example, embodiments of the present disclosure include a computer program product, which includes a computer program carried on a non-transitory computer-readable medium. The computer program contains program codes for implementing the method illustrated in the flowcharts. In these embodiments, the computer program may be downloaded and installed from a network through the communication unit 609, or installed from the storage unit 608, or installed from the ROM 602. When the computer program is executed by the processing unit 601, the above-mentioned functions defined in the methods according to the embodiments of the present disclosure are performed.

It should be noted that the above computer-readable storage medium in the present disclosure may be a computer-readable signal medium, a computer-readable storage medium, or any combination thereof. The computer-readable storage medium may be, but not limited to, for example, an electrical, magnetic, optical, electromagnetic, infrared, or semiconductor system, apparatus, device, or any combination thereof. More specific examples of the computer-readable storage medium may include, but are not limited to: an electrical connection having one or more wires, a portable computer disk, a hard disk, a Random-Access Memory (RAM), a Read-Only Memory (ROM), an Erasable Programmable Read Only Memory (EPROM or a flash memory), an optical fiber, a Compact Disc Read-Only Memory (CD-ROM), an optical memory device, a magnetic memory device, or any suitable combination thereof. In the present disclosure, the computer-readable storage medium may be any tangible medium including or storing programs, which may be used by or used with an instruction execution system, apparatus, or device. However, in the present disclosure, the computer-readable signal medium may include a data signal propagated in a baseband or as a part of a carrier and carrying computer-readable program codes. Such propagated data signal may be in various forms, including but not limited to an electromagnetic signal, an optical signal, or any suitable combination thereof. The computer-readable signal medium may be any computer-readable medium other than the computer-readable storage medium, and may transmit, propagate, or transfer programs used by or used with an instruction execution system, apparatus or device. The program codes contained on the computer-readable medium may be transferred via any appropriate medium, including but not limited to an electric cable, an optical cable, Radio Frequency (RF), or any suitable combination thereof.

In some implementations, a client side and a server may achieve communication by utilizing any network protocol, such as a HTTP (HyperText Transfer Protocol), which has been known at present or will be developed in the future, and may be interconnected by communicating with digital data in any form or medium. An example of a communication network includes a local area network ("LAN"), a wide area network ("WAN"), internetwork (such as Internet), an end-to-end network (such as ad hoc end-to-end network), and any other networks that has been known at present or will be developed in the future.

The above computer-readable medium may be included in the above electronic device, or may be present independently without being assembled into the electronic device.

The above computer-readable medium may carry one or more programs, which when executed by the electronic device, allows the electronic device to: display a current page on a display interface of an application, and display page identifiers of at least two first pages of the application in a predetermined region of the display interface, the current page being one of the at least two first pages; obtain a sliding operation for the current page; and when the sliding operation is a first sliding switching operation, switch the current page on the display interface to a next page, and adjust a position of each page identifier in the predetermined region, the next page being the first page of the at least two first pages other than the current page.

The computer program codes for implementing the operations according to the present disclosure may be written in one or more programming languages or any combination thereof. The programming languages may include, but not limited to, object-oriented programming languages, such as Java, Smalltalk, or C++, as well as conventional procedural programming languages, such as "C" language or similar programming languages. The program codes may be executed completely on a user computer, partly on the user computer, as a standalone software package, partly on the user computer and partly on a remote computer, or completely on a remote computer or a server. In a case where the remote computer is involved, the remote computer may be connected to the user computer through any types of networks, including a Local Area Network (LAN) or a Wide Area Network (WAN), or to an external computer (e.g., over the Internet by using an Internet service provider).

The flowcharts and block diagrams in the accompanying drawings illustrate architectures, functions, and operations of possible implementations of systems, methods and computer program products according to various embodiments of the present disclosure. In this regard, each block in the flowcharts or block diagrams may represent a module, a program segment, or a part of codes. The module, program segment, or part of codes may contain one or more executable instructions for implementing a specified logical function. It should also be noted that, in some alternative implementations, functions showed in blocks may occur in a different order from the order shown in the accompanying drawings. For example, two blocks illustrated in succession may actually be executed substantially in parallel with each other, or sometimes even in a reverse order, depending on functions involved. It should also be noted that each block in the block diagrams and/or flowcharts, or any combination of the blocks in the block diagrams and/or flowcharts, may be implemented by using a dedicated hardware-based system that is configured to perform specified functions or operations or by using a combination of dedicated hardware and computer instructions.

Modules or units involved and described in the embodiments of the present disclosure can be implemented in software or hardware. Here, a name of a module or a unit does not constitute a limitation on the module or the unit itself under certain circumstances. For example, a page displaying module may also be described as "a module for displaying a page".

The functions described above may be performed, at least in part, by one or more hardware logic components. For example, without limitation, exemplary types of hardware logic components include a Field Programmable Gate Array (FPGA), an Application Specific Integrated Circuit (ASIC), an Application Specific Standard Product (ASSP), a System on Chip (SOC), a Complex Programmable Logic Device (CPLD), and the like.

In the context of this disclosure, the machine-readable medium may be a tangible medium, which may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of a machine-readable storage medium include an electrical connection having one or more wires, a portable computer disk, a hard disk, a Random Access Memory (RAM), a Read Only Memory (ROM), an Erasable Programmable Read Only Memory (EPROM) or a flash memory, an optical fiber, a Compact Disc Read Only Memory (CD-ROM), an optical memory device, a magnetic memory device, or any suitable combination thereof.

According to one or more embodiments of the present disclosure, the present disclosure provides a page switching method for an application. The method includes: displaying a current page on a display interface of the application, and displaying page identifiers of at least two first pages of the application in a predetermined region of the display interface, the current page being one of the at least two first pages; obtaining a sliding operation for the current page; and when the sliding operation is a first sliding switching operation, switch the current page on the display interface to a next page, and adjust a position of each page identifier in the predetermined region. The next page is a first page of the at least two first pages other than the current page.

According to one or more embodiments of the present disclosure, the method also includes switching the current page to a second page corresponding to the current page when the sliding operation is a second sliding switching operation.

According to one or more embodiments of the present disclosure, the method also includes, subsequent to obtaining the sliding operation for the current page: determining the sliding operation as the first sliding switching operation when the sliding direction of the sliding operation is a first transverse direction and a corresponding sliding distance is equal to or greater than a predetermined distance; and determining the sliding operation as a second sliding switching operation when the sliding direction of the sliding operation is a second transverse direction and the corresponding sliding distance is equal to or greater than the predetermined distance. The first transverse direction is opposite to the second transverse direction.

According to one or more embodiments of the present disclosure, the at least two first pages are arranged in a predetermined order. The switching the current page on the display interface to the next page includes: switching the current page to the first page immediately following and adjacent to the current page in the predetermined order, when the current page is not a first page arranged as an end, and switching the current page to a first page arranged as a top, when the current page is the first page arranged as the end.

According to one or more embodiments of the present disclosure, respective page identifiers are displayed in the predetermined region in a form of a transverse queue, and the adjusting the position of each page identifier in the predetermined region includes displaying the page identifier of the next page at a tail of the transverse queue, and displaying the page identifier of the current page at a head of the transverse queue.

According to one or more embodiments of the present disclosure, the page identifier is a page name corresponding to the first page. The method also includes at least one of: enlarging a font size of the page name at the tail of the transverse queue; changing a font color of the page name at the tail of the transverse queue; and adding an underline to the page name at the tail of the transverse queue.

According to one or more embodiments of the present disclosure, the method also includes displaying a corresponding page switching animation while switching the current page on the display interface to the next page.

According to one or more embodiments of the present disclosure, the displaying the corresponding page switching animation includes displaying a page switching animation in which a page gradually becomes bigger as appearing and gradually becomes smaller as disappearing and/or a page switching animation in which a page is gradually covered.

According to one or more embodiments of the present disclosure, the present disclosure provides a page switching apparatus for an application. The page switching apparatus includes: a page display module configured to display a current page on a display interface of the application, and display page identifiers of at least two first pages of the application in a predetermined region of the display interface, wherein the current page is one of the at least two first pages; a sliding operation obtaining module configured to obtain a sliding operation for the current page; and a page switching module configured to: when the sliding operation is a first sliding switching operation, switch the current page on the display interface to a next page, and adjust a position of each page identifier in the predetermined region, wherein the next page is a first page of the at least two first pages other than the current page.

According to one or more embodiments of the present disclosure, the present disclosure provides an electronic device including a memory having a program stored thereon and a processor configured to execute the program to implement the method as described in the above one or more embodiments.

According to one or more embodiments of the present disclosure, the present disclosure provides a non-transitory readable storage medium having a program stored thereon. The program, when is executed by a processor, implements the method as described in the above one or more embodiments.

The above description is only intended to explain the preferred embodiments of the present disclosure and the employed principles of technology. It will be appreciated by those skilled in the art that the scope of the present disclosure herein is not limited to the technical solutions formed by the specific combinations of the above technical features, but should also encompass other technical solutions formed by any other combinations of features described above or equivalents thereof without departing from the above ideas of the present disclosure. For example, the above features and the technical features disclosed in the present disclosure having similar functions (but not limited to them) are replaced with each other to form the technical solution.

Further, although the operations are depicted in a specific order, this should not be understood as requiring these operations to be performed in the specific order illustrated or in a sequential order. Under certain circumstances, multitasking and parallel processing may be advantageous. Likewise, although several specific implementation details are included in the above discussion, these should not be construed as limitations on the scope of the present disclosure. Certain features that are described in the context of separate embodiments can also be implemented in combination in a single embodiment. Conversely, various features described in the context of a single embodiment can also be implemented in multiple embodiments separately or in any suitable combination.

Although the subject matter has been described in language specific to structural features and/or logical actions of method, it should be understood that the subject matter defined in the appended claims is not necessarily limited to the specific features or actions described above. On the contrary, the specific features and actions described above are merely exemplary forms of implementing the claims.

## Claims

1. A page switching method for an application, the method comprising:
displaying (S101) a current page on a display interface of the application, and displaying page identifiers of at least two first pages of the application in a predetermined region of the display interface, wherein the current page is one of the at least two first pages;
obtaining (S102) a sliding operation for the current page; and
when the sliding operation is a first sliding switching operation, switching (S103) the current page on the display interface to a next page, and adjusting a position of each page identifier in the predetermined region, wherein the next page is a first page of the at least two first pages other than the current page, wherein said adjusting the position of each page identifier comprises adjusting the position of each page identifier in the predetermined region while switching the current page on the display interface to the next page,
wherein the application is a short video application, the at least two first pages of the application are used to display videos of respective pushing mechanisms, and each of the page identifiers is configured to indicate a respective pushing mechanism of the video displayed on the first page corresponding to the page identifier, the pushing mechanisms comprising a recommended video pushing mechanism and a following video pushing mechanism,
the at least two first pages are arranged in a predetermined order; and
said switching the current page on the display interface to the next page comprises:
switching the current page to a first page immediately following and adjacent to the current page in the predetermined order along an opposite direction of the first sliding switching operation, when the current page is not a first page arranged as an end in the predetermined order along the opposite direction of the first sliding switching operation; and
switching the current page to a first page arranged as a top in the predetermined order along the opposite direction of the first sliding switching operation, when the current page is the first page arranged as the end in the predetermined order along the opposite direction of the first sliding switching operation, and
the method further comprises: subsequent to said obtaining the sliding operation for the current page,
determining the sliding operation as the first sliding switching operation, when a sliding direction of the sliding operation is a first transverse direction and a corresponding sliding distance is equal to or greater than a predetermined distance; and
determining the sliding operation as a second sliding switching operation, when the sliding direction of the sliding operation is a second transverse direction and the corresponding sliding distance is equal to or greater than the predetermined distance, wherein the first transverse direction is opposite to the second transverse direction, and
when the sliding operation is the second sliding switching operation, switching the current page to a second page corresponding to the current page, wherein the second page is a personal page of a short video author of a short video being viewed in the current page, the personal page of the short video author including short videos published by the short video author.

2. The method according to claim 1, wherein:
respective page identifiers are displayed in the predetermined region in a form of a transverse queue; and
said adjusting the position of each page identifier in the predetermined region comprises: displaying the page identifier of the next page at a tail of the transverse queue, and displaying the page identifier of the current page at a head of the transverse queue.

3. The method according to claim 2, wherein the page identifier is a page name corresponding to the first page,
the method further comprises at least one of:
enlarging a font size of the page name at the tail of the transverse queue;
changing a font color of the page name at the tail of the transverse queue; and
adding an underline to the page name at the tail of the transverse queue.

4. The method according to claim 1, further comprising:
displaying a corresponding page switching animation while switching the current page on the display interface to the next page.

5. The method according to claim 4, wherein said displaying the corresponding page switching animation comprises:
displaying a page switching animation, in which a page gradually becomes bigger as appearing and gradually becomes smaller as disappearing and/or a page switching animation in which pages are gradually covered.

6. The method according to any of claims 1-5, wherein
said at least two first pages comprise a recommended page corresponding to the recommended video pushing mechanism and a following page corresponding to the following video pushing mechanism, in the recommended page a latest short video is recommended to a user according to a preset rule, and in the following page a latest short video published by a short video author followed by the user is recommended to the user, and
said displaying page identifiers of at least two first pages of the application in the predetermined region of the display interface comprises: displaying at least page identifiers of the recommended page and the following page in a navigation bar of the display interface.

7. An electronic device, comprising:
a memory having a program comprising instructions stored thereon; and
a processor configured to execute the instructions to implement the method according to any one of claims 1 to 6.

8. A non-transitory readable storage medium, having a program comprising instructions stored thereon, wherein the instructions, when executed by a processor, cause the processor to implement the method according to any one of claims 1 to 6.

9. A computer program product comprising instructions which, when executed by a processor, cause the processor to implement the method according to any one of claims 1 to 6.

10. A computer program comprising instructions which, when executed by a processor, cause the processor to implement the method according to any one of claims 1 to 6.

## Patentansprüche

1. Verfahren zum Seitenwechsel für eine Anwendung, wobei das Verfahren umfasst: Anzeigen (S101) einer aktuellen Seite in einer Anzeigeoberfläche der Anwendung, und Anzeigen von Seitenkennungen von mindestens zwei ersten Seiten der Anwendung in einem vorbestimmten Bereich der Anzeigeoberfläche, wobei die aktuelle Seite eine der mindestens zwei ersten Seiten ist;
Erhalten (S102) eines Wischvorgangs für die aktuelle Seite; und
wenn der Wischvorgang ein erster Wischwechselvorgang ist, Wechseln (S103) der aktuellen Seite in der Anzeigeoberfläche auf eine nächste Seite und Anpassen einer Position jeder Seitenkennung in dem vorbestimmten Bereich, wobei die nächste Seite eine andere erste Seite der mindestens zwei ersten Seiten als die aktuelle Seite ist, wobei das Anpassen der Position jeder Seitenkennung das Anpassen der Position jeder Seitenkennung in dem vorbestimmten Bereich beim Wechseln der aktuellen Seite in der Anzeigeoberfläche auf die nächste Seite umfasst,
wobei
die Anwendung eine Kurzvideo-Anwendung ist, die mindestens zwei ersten Seiten der Anwendung verwendet werden, um Videos jeweiliger Push-Mechanismen anzuzeigen und jede der Seitenkennungen so konfiguriert ist, dass sie einen jeweiligen Push-Mechanismus des auf der ersten Seite angezeigten Videos, das der Seitenkennung entspricht, angibt, wobei die Push-Mechanismen einen Push-Mechanismus für empfohlene Videos und einen Push-Mechanismus für folgende Videos umfassen,
die mindestens zwei ersten Seiten in einer vorbestimmten Reihenfolge angeordnet sind; und
das Wechseln der aktuellen Seite in der Anzeigeoberfläche auf die nächste Seite umfasst:
Wechseln der aktuellen Seite auf eine erste Seite, die der aktuellen Seite in der vorbestimmten Reihenfolge entlang einer dem ersten Wischwechselvorgang entgegengesetzten Richtung unmittelbar folgt und benachbart ist, wenn die aktuelle Seite keine erste Seite ist, die in der vorbestimmten Reihenfolge entlang der dem ersten Wischwechselvorgang entgegengesetzten Richtung als Ende angeordnet ist; und
Wechseln der aktuellen Seite auf eine erste Seite, die als oberste in der vorbestimmten Reihenfolge entlang der dem ersten Wischwechselvorgang entgegengesetzten Richtung angeordnet ist, wenn die aktuelle Seite die erste Seite ist, die in der vorbestimmten Reihenfolge entlang der dem ersten Wischwechselvorgang entgegengesetzten Richtung als Ende angeordnet ist, und
das Verfahren weiter umfasst: im Anschluss an das Erhalten des Wischvorgangs für die aktuelle Seite,
Bestimmen des Wischvorgangs als ersten Wischwechselvorgang, wenn eine Wischrichtung des Wischvorgangs eine erste Querrichtung ist und eine entsprechende Wischstrecke gleich oder größer als eine vorbestimmte Strecke ist; und
Bestimmen des Wischvorgangs als zweiten Wischwechselvorgang, wenn die Wischrichtung des Wischvorgangs eine zweite Querrichtung ist und die entsprechende Wischstrecke gleich oder größer als die vorbestimmte Strecke ist, wobei die erste Querrichtung der zweiten Querrichtung entgegengesetzt ist, und
wenn der Wischvorgang der zweite Wischwechselvorgang ist, Wechseln der aktuellen Seite auf eine zweite Seite, die der aktuellen Seite entspricht, wobei die zweite Seite eine persönliche Seite eines Kurzvideo-Autors eines Kurzvideos ist, das in der aktuellen Seite angesehen wird, wobei die persönliche Seite des Kurzvideo-Autors vom Kurzvideo-Autor veröffentlichte Kurzvideos beinhaltet.

2. Verfahren nach Anspruch 1, wobei:
jeweilige Seitenkennungen in dem vorbestimmten Bereich in Form einer quer laufenden Warteschlange angezeigt werden; und
das Anpassen der Position jeder Seitenkennung in dem vorbestimmten Bereich umfasst: Anzeigen der Seitenkennung der nächsten Seite am hinteren Ende der quer laufenden Warteschlange, und Anzeigen der Seitenkennung der aktuellen Seite am vorderen Ende der quer laufenden Warteschlange.

3. Verfahren nach Anspruch 2, wobei die Seitenkennung ein Seitenname ist, der der ersten Seite entspricht,
das Verfahren weiter mindestens eines umfasst von:
Vergrößern einer Schriftgröße des Seitennamens am hinteren Ende der quer laufenden Warteschlange;
Ändern einer Schriftfarbe des Seitennamens am hinteren Ende der quer laufenden Warteschlange; und
Hinzufügen einer Unterstreichung zum Seitennamen am hinteren Ende der quer laufenden Warteschlange.

4. Verfahren nach Anspruch 1, weiter umfassend:
Anzeigen einer entsprechenden Seitenwechselanimation beim Wechseln der aktuellen Seite in der Anzeigeoberfläche auf die nächste Seite.

5. Verfahren nach Anspruch 4, wobei das Anzeigen der entsprechenden Seitenwechselanimation umfasst:
Anzeigen einer Seitenwechselanimation, bei der eine Seite beim Einblenden allmählich größer wird und beim Ausblenden allmählich kleiner wird und/oder einer Seitenwechselanimation, bei der Seiten allmählich verdeckt werden.

6. Verfahren nach einem der Ansprüche 1-5, wobei
die mindestens zwei ersten Seiten eine empfohlene Seite, die dem Push-Mechanismus für empfohlene Videos entspricht, und eine folgende Seite, die dem Push-Mechanismus für folgende Videos entspricht, umfassen, in der empfohlenen Seite einem Benutzer ein neuestes Kurzvideo gemäß einer voreingestellten Regel empfohlen wird und in der folgenden Seite dem Benutzer ein neuestes Kurzvideo empfohlen wird, das von einem Kurzvideo-Autor, dem der Benutzer folgt, veröffentlicht wird, und
das Anzeigen von Seitenkennungen von mindestens zwei ersten Seiten der Anwendung im vorbestimmten Bereich der Anzeigeoberfläche umfasst: Anzeigen von mindestens Seitenkennungen der empfohlenen Seite und der folgenden Seite in einer Navigationsleiste der Anzeigeoberfläche.

7. Elektronische Vorrichtung, umfassend:
einen Speicher, auf dem ein Programm gespeichert ist, das Anweisungen umfasst; und
einen Prozessor, der so konfiguriert ist, dass er die Anweisungen ausführt, um das Verfahren nach einem der Ansprüche 1 bis 6 zu implementieren.

8. Nichtflüchtiges lesbares Speichermedium, auf dem ein Programm gespeichert ist, das Anweisungen umfasst, wobei
die Anweisungen, wenn sie von einem Prozessor ausgeführt werden, bewirken, dass der Prozessor das Verfahren nach einem der Ansprüche 1 bis 6 implementiert.

9. Computerprogrammprodukt, das Anweisungen umfasst, die,
wenn sie von einem Prozessor ausgeführt werden, bewirken, dass der Prozessor das Verfahren nach einem der Ansprüche 1 bis 6 implementiert.

10. Computerprogramm, das Anweisungen umfasst, die,
wenn sie von einem Prozessor ausgeführt werden, bewirken, dass der Prozessor das Verfahren nach einem der Ansprüche 1 bis 6 implementiert.

## Revendications

1. Procédé de changement de page pour une application, le procédé comprenant : l'affichage (S101) d'une page courante sur une interface d'affichage de l'application, et l'affichage d'identifiants de page d'au moins deux premières pages de l'application dans une région prédéterminée de l'interface d'affichage, dans lequel la page courante est l'une des au moins deux premières pages ;
l'obtention (S102) d'une opération de glissement pour la page courante ; et
lorsque l'opération de glissement est une première opération de changement par glissement, le passage (S103) de la page courante sur l'interface d'affichage à une page suivante, et l'ajustement d'une position de chaque identifiant de page dans la région prédéterminée, dans lequel la page suivante est une première page des au moins deux premières pages autre que la page courante, dans lequel ledit ajustement de la position de chaque identifiant de page comprend l'ajustement de la position de chaque identifiant de page dans la région prédéterminée tout en passant de la page courante sur l'interface d'affichage à la page suivante,
dans lequel
l'application est une application vidéo courte, les au moins deux premières pages de l'application sont utilisées pour afficher des vidéos de mécanismes de poussée respectifs, et chacun des identifiants de page est configuré pour indiquer un mécanisme de poussée respectif de la vidéo affichée sur la première page correspondant à l'identifiant de page, les mécanismes de poussée comprenant un mécanisme de poussée de vidéo recommandée et un mécanisme de poussée de vidéo suivante,
les au moins deux premières pages sont agencées dans un ordre prédéterminé ; et
ledit passage de la page courante sur l'interface d'affichage à la page suivante comprend :
le passage de la page courante à une première page immédiatement suivante et adjacente à la page courante dans l'ordre prédéterminé le long d'une direction opposée de la première opération de changement par glissement, lorsque la page courante n'est pas une première page agencée en tant que fin dans l'ordre prédéterminé le long de la direction opposée de la première opération de changement par glissement ; et
le passage de la page courante à une première page agencée en tête de l'ordre prédéterminé le long de la direction opposée de la première opération de changement par glissement, lorsque la page courante est la première page agencée en tant que fin dans l'ordre prédéterminé le long de la direction opposée de la première opération de changement par glissement, et
le procédé comprend en outre : suite à ladite obtention de l'opération de glissement pour la page courante,
la détermination de l'opération de glissement comme première opération de changement par glissement, lorsqu'une direction de glissement de l'opération de glissement est une première direction transversale et une distance de glissement correspondante est supérieure ou égale à une distance prédéterminée ; et
la détermination de l'opération de glissement comme seconde opération de changement par glissement, lorsque la direction de glissement de l'opération de glissement est une seconde direction transversale et la distance de glissement correspondante est supérieure ou égale à la distance prédéterminée, dans lequel la première direction transversale est opposée à la seconde direction transversale, et
lorsque l'opération de glissement est la seconde opération de changement par glissement, le passage de la page courante à une seconde page correspondant à la page courante, dans lequel la seconde page est une page personnelle d'un auteur de vidéo courte d'une vidéo courte visionnée dans la page courante, la page personnelle de l'auteur de vidéo courte incluant des vidéos courtes publiées par l'auteur de vidéo courte.

2. Procédé selon la revendication 1, dans lequel :
des identifiants de page respectifs sont affichés dans la région prédéterminée sous forme de file d'attente transversale ; et
ledit ajustement de la position de chaque identifiant de page dans la région prédéterminée comprend : l'affichage de l'identifiant de page de la page suivante en bout de la file d'attente transversale, et l'affichage de l'identifiant de page de la page courante en tête de la file d'attente transversale.

3. Procédé selon la revendication 2, dans lequel l'identifiant de page est un nom de page correspondant à la première page,
le procédé comprend en outre au moins l'un parmi :
l'agrandissement d'une taille de police du nom de page en bout de la file d'attente transversale ;
le changement d'une couleur de police du nom de page en bout de la file d'attente transversale ; et
l'ajout d'un effet de soulignement au nom de page en bout de la file d'attente transversale.

4. Procédé selon la revendication 1, comprenant en outre :
l'affichage d'une animation de changement de page correspondante lors du passage de la page courante sur l'interface d'affichage à la page suivante.

5. Procédé selon la revendication 4, dans lequel ledit affichage de l'animation de changement de page correspondante comprend :
l'affichage d'une animation de changement de page, dans laquelle une page devient progressivement plus grande à mesure qu'elle apparaît et devient progressivement plus petite à mesure qu'elle disparaît et/ou d'une animation de changement de page dans laquelle des pages sont progressivement recouvertes.

6. Procédé selon l'une quelconque des revendications 1-5, dans lequel
lesdites au moins deux premières pages comprennent une page recommandée correspondant au mécanisme de poussée de vidéo recommandée et une page suivante correspondant au mécanisme de poussée de vidéo suivante, dans la page recommandée la dernière vidéo courte est recommandée à un utilisateur selon une règle prédéfinie, et dans la page suivante la dernière vidéo courte publiée par un auteur de vidéo courte suivi par l'utilisateur est recommandée à l'utilisateur, et
ledit affichage d'identifiants de page d'au moins deux premières pages de l'application dans la région prédéterminée de l'interface d'affichage comprend : l'affichage d'au moins des identifiants de page de la page recommandée et de la page suivante dans une barre de navigation de l'interface d'affichage.

7. Dispositif électronique, comprenant :
une mémoire présentant un programme stocké sur celle-ci comprenant des instructions ; et
un processeur configuré pour exécuter les instructions pour mettre en œuvre le procédé selon l'une quelconque des revendications 1 à 6.

8. Support de stockage lisible non transitoire, présentant un programme stocké sur celui-ci comprenant des instructions, dans lequel
les instructions, lorsqu'elles sont exécutées par un processeur, amènent le processeur à mettre en œuvre le procédé selon l'une quelconque des revendications 1 à 6.

9. Produit de programme informatique comprenant des instructions qui,
lorsqu'elles sont exécutées par un processeur, amènent le processeur à mettre en œuvre le procédé selon l'une quelconque des revendications 1 à 6.

10. Programme informatique comprenant des instructions qui,
lorsqu'elles sont exécutées par un processeur, amènent le processeur à mettre en œuvre le procédé selon l'une quelconque des revendications 1 à 6.
